# EUROPEAN PATENT APPLICATION

(11) **EP 4 389 065 A1**
(43) Date of publication of application: **26.06.2024**
(21) Application number: 23159925.9
(22) Date of filing: 03.03.2023
(51) Int. Cl.: A61C 17/22, A61C 17/34

(54) **DEVICE, METHOD AND SYSTEM FOR INSTANTANEOUS ORAL CARE FEEDBACK**

(30) Priority: 22.12.2022 US 202263434546 P
(71) Applicant: Koninklijke Philips N.V., 5656 AG Eindhoven (NL)
(72) Inventor: YUAN, Chun Pong, Eindhoven (NL); REYES, Ivan, Eindhoven (NL); BUIL, Vincentius Paulus, 5656AG Eindhoven (NL); KUHLMANN, Daan, Eindhoven (NL); KULAS, Alaxandra, Eindhoven (NL); NUNES, Dionisio Massingo, Eindhoven (NL); HIRSCH, Kelly Laurence, Eindhoven (NL); VUGTS, Marinus Arnoldus Martinus, Eindhoven (NL); LEE, Sungsoo, Eindhoven (NL); BORLEFFS, Sophie, Eindhoven (NL); WEICHSLER, Walter Julius, Eindhoven (NL)
(74) Representative: Philips Intellectual Property & Standards

(57) **Abstract**

An oral care device, method and system for instantaneous feedback regarding at least a coverage area and an endpoint within a treatment region or cleaning segment of a user's oral cavity, provided in a user interface disposed in an oral care device, for example, by illumination of the handle, such that there is no external data transmission.

## Description

### FIELD OF THE INVENTION

The present disclosure relates generally to devices, systems and methods for oral care, and more particularly relates to user feedback regarding oral care treatments including electronic toothbrushing.

### BACKGROUND

Providing effective feedback to a user with respect to a user's oral hygiene practices enables efficacious cleaning of the oral cavity. For example, if feedback regarding an oral cleaning within the user's mouth is provided during a toothbrushing session, portions of a group of teeth is provided, a specific tooth, or gum section not yet cleaned may be identified so that the user can focus on those areas. Further, appropriate feedback regarding a user's technique, e.g., cleaning too hard, too soft, or not long enough on a particular section of the mouth, can be provided based on tracking the location and respective brushing pressure and duration of the oral care device within a particular region of the oral cavity during use.

Various conventional forms of providing feedback regarding the location of an oral care device within a user's mouth are known. Some current high-end toothbrushes are capable of providing feedback based on data received from inertial motion sensor(s) including accelerometers, gyroscopes, and magnetic sensor(s) which are utilized to measure the motion of an oral care device. However, multiple drawbacks and limitations may be associated with transmission of data and providing feedback through an external electronic device. Due to restrictive bandwidth and associated decimation of data transmitted to an external device such as, for example, a smartphone typically encumbered by low energy Bluetooth connectivity limits, data levels and transmission speeds may be compromised. As a result, lag times and reduction in data transmission to an external device may stymie instantaneous, real-time feedback simultaneously to contemporaneous toothbrushing or other dental treatment. In addition, device and/or user capabilities and limitations may inhibit data transmission.

As a result of the feedback loop delay, current dental hygiene and treatment systems lack the cause/effect immediacy enabling a user to instantaneously adapt toothbrushing coverage and pressure simultaneously in tandem with the feedback. Further drawbacks result from lost time, effort, user feedback, and attention to toothbrush coverage due to juggling of a second electronic device such as a smartphone in order to place and keep the device display in the user's line of view while simultaneously brushing. Coordinating placement of the device relative to the toothbrush while simultaneously keeping the feedback provided on the smartphone display in sight may thus interfere with efficacious cleaning or treatment of the user's oral cavity.

Yet further drawbacks with use of feedback on smartphone apps, as well as, external bus systems that enable connections to external devices such as dental office software service network hubs or other remote servers are security and data breach risks exposing users to privacy invasions. Transmitting data to external devices also requires compliance with regulatory requirements including user permissions to track and save or opt out of data usage that raising additional legal risks and issues.

Accordingly, there is a need in the oral care art for improved devices, systems and methods enabling more facile and efficacious positioning in a user's line of vision, instantaneous and accurate feedback with regard to a user's oral care in real time with enhanced protection of the privacy of a user's information.

### SUMMARY OF THE INVENTION

The present disclosure is directed to inventive oral care devices, systems and methods for providing instantaneous feedback simultaneously to concurrent coverage and pressure of an oral care device, such as, for example, an electronic toothbrush, such that there is no external data transmission.

The present disclosure includes various embodiments of oral care devices, methodologies and systems for providing instantaneous feedback to the user while conducting oral treatment session through a user interface contained within an oral care device such that there is no external communication of user information. Embodiments of the inventive subject matter include an oral care device wherein data provided by a plurality of sensors including inertial motion and other sensors is received by a controller and collated by a processor to provide feedback regarding a treatment region during a treatment session, as detailed below.

The embodiments and implementations disclosed or otherwise envisioned herein can be utilized by or adapted to numerous oral care devices. Examples of such suitable oral care devices include an electronic toothbrush, a flossing device, an oral and/or aerated irrigation tool, a tongue cleaner. However, the disclosure is not limited to these enumerated devices, and thus implementations and embodiments disclosed herein can encompass any oral care device.

Various embodiments and implementations herein directed to such oral care devices have a device head, a plurality of sensors including an inertial motion and pressure sensors directly connected to a controller comprising a processor and a non-transitory storage medium for storing program code configured to determine the location of the device head in context of calibrated treatment or cleaning regions based on a dental model of a user's oral cavity. The controller is thereby configured to track the device head location in context of treatment or cleaning regions of a user's oral cavity and to implement a processor configured to instantaneously collate and communicate feedback to a user interface regarding a concurrent cleaning segment. In various implementations, the oral care device is configured to provide feedback relative to previous redundant or overall coverage, in the oral care device user interface.

Various embodiments of the oral care device and method include an electronic toothbrush having a device head with a plurality of sensors including but not limited to an inertial motion sensor and a handle, a controller configured for (i) processing, based on a dental model of the user's oral cavity and data sensed by the sensors information provided by the device head, when the data complies with programmed criteria including an endpoint of a time period and a motion exerted by the device head within the cleaning segment and (ii) directly communicating instantaneous feedback to a user interface disposed in the electronic toothbrush, wherein the instantaneous feedback at least correlates to the endpoint based on coverage in context of treatment or a cleaning region such that there is no external transmission of data.

Various embodiments providing dental treatment applications utilize an inertial motion sensor or unit ("IMU"), as defined below, and may include cameras and/or linear light arrays, timers and/or pressure and other sensor(s). Sensor data is received by a controller and processor configured for processing coverage of the device head in context of a treatment region whereby feedback is communicated to a user interface when the data complies with the programmed criteria, that may be provided by an algorithm and/or derived from an artificial intelligence module parsing of data such as, for example, device head location, motion and pressure, corresponding to the treatment provided by the oral care device. In various embodiments, the user interface is disposed in the handle of the electronic toothbrush and can comprise an illuminated portion of the handle corresponding to an endpoint corresponding with data compliance with the programmed criteria and derived intelligence.

In various embodiments, the user interface includes an illuminated portion that projects a first color before the endpoint indicating compliance with data criteria and projects a second color after the endpoint indicating compliance with data criteria for the cleaning segment being brushed. Various embodiments further employ a user interface that includes a visual code, haptic indicator, an audible indicator and/or an alphanumeric readout. In some embodiments, the processor provides feedback to the user interface when the device head is repositioned within a cleaning region that the controller indicates is already in compliance with data criteria corresponding an endpoint during a cleaning session. Implementations of this device and method include providing user feedback when the device head is repositioned within a cleaning region that the processor indicates is in partial compliance with data criteria corresponding an endpoint during a cleaning session. Various implementations may further process and provide feedback to the user interface regarding all of the cleaning regions covered in one or more cleaning sessions.

There exist multiple sources for programming a dental model of the user's oral cavity employed for determining the location of the device head based on calibrated cleaning or treatment regions within the user's oral cavity that may be utilized independently or combined. Some implementations employ an intra oral scan of the user's oral cavity that can be obtained through a smartphone application, dental office plate or model. Implementations may also employ a generic statistical model derived from a database of age-based geometric oral cavity configurations and/or a generic template whereon the user's teeth are modeled in accordance with data received from the sensor(s) and/or data stored during one or more cleaning sessions. In many implementations, the processor may employ an algorithm that determines the cleaning region where the device head is positioned based on the mathematical analysis of an oral cavity model, gravitational acceleration, and a database of generic user teeth cleaning patterns.

The various embodiments include a method and system for employing oral care devices that include receiving and collating sensor data regarding coverage within a treatment region, processing based on a dental model of the user's oral cavity, when the device head is located within a cleaning region of the user's oral cavity and when the data complies with programmed criteria including an endpoint of a time period based on coverage and pressure exerted by the device head within the cleaning region, and communicating instantaneous feedback corresponding to the endpoint and the motion data in a user interface disposed in the electronic toothbrush such that there is no external transmission of data outside of the electronic toothbrush. Various exemplary embodiments of the personal care appliance may deploy a treatment module in the form of an electronic toothbrush. Such and other embodiments may include a pressure source and/or a driving mechanism capable of activating alternative treatment modules.

Embodiments include a controller configured for (i) receiving data as to, among other sensed data, (a) inertial motion, (b) pressure, (c) proximity, (d) trajectory, (e) coverage, and (f) time information provided by device head, and (ii) determining an endpoint of a time period based on coverage and pressure of the device head within the cleaning region or segment; and providing feedback via a user interface configured for directly communicating instantaneous feedback corresponding to coverage and endpoint concurrently with the simultaneous user application of the brushing or other treatment application communicated within the oral care device such that there is no external transmission of data. In some embodiments, the system may implement a user interface disposed in the handle of the electronic toothbrush.

In various embodiments, the step of communicating instantaneous feedback is provided in the handle and may include projecting a first indicator such as, for example, an illuminated portion of a first color before a coverage of a cleaning region or segment endpoint and projecting a second indicator such as, for example, an illuminated portion of a second color after the endpoint is reached.

A further feature of various embodiments communicates feedback when the device head is repositioned within a cleaning region wherein the controller indicates previous full or partial compliance with programmed criteria corresponding with reaching an endpoint. A yet further feature of various embodiments provides simultaneous overall feedback of all cleaning regions covered in a cleaning session.

An aspect of the various embodiments implements a multiple region approach to the oral cavity treatment. In some embodiments, the controller is configured to provide treatment regions and feedback based on identifying a set of sixteen cleaning segments that include a right sextant, a left sextant and a center sextant in the upper dental arch and a right sextant, a left sextant and a center sextant in a lower dental arch of the user's oral cavity. In the latter implementations, the right and left sextants of the upper dental arch and lower dental arch each have three cleaning segments comprising an outer surface, an inner surface and a transverse surface between the inner surface and outer surface of the cleaning segment, and the center sextants have two cleaning segments comprising an outer surface and an inner surface. In embodiments utilizing the sixteen segment treatment, endpoints are set when the pressure data complies with the data criteria for the device head exerting sufficient pressure in the cleaning segment for a duration of between about 7 seconds and about 8 seconds.

Various embodiments further provide an oral care system for providing instantaneous feedback when treating or cleaning, e.g., by toothbrushing, a user's oral cavity. Such an oral care system includes an oral care device with a device head and a plurality of sensors configured to sense data regarding coverage of a region of the user's oral cavity. Embodiments of the system employ a controller including a processor configured for determining and concurrently communicating to a user interface disposed within the oral care device instantaneous feedback corresponding to at least a coverage area and an endpoint such that there is no external transmission of data outside of the oral care device 100. The system thus employs a hard-wired connection module in the form of a bus configured to directly communicate instantaneous feedback corresponding to at least a coverage area and an endpoint concurrently with the treating or cleaning activity, wherein the processor directly communicates with the user interface, such as, for example, a handle of the electronic toothbrush such that there is no external transmission of data.

In various implementations and embodiments, the system or device may utilize various sensors, algorithms and/or AI to provide instantaneous feedback through a hardwired circuit connection to an internal user interface regarding the determined orientation and device head with respect to the user's oral cavity in substantially real time, meaning as soon as the information is generated and available to the user. Due to the unlimited bandwidth and reduced loop length provided by the internal circuitry of the controller and associated microcontrollers, feedback provided in user interface is rapid, instantaneous, and highly accurate and detailed. In contrast to the low data rates of conventional low energy smartphone Bluetooth connections that often hover at 30 hertz (Hz), the exponentially much higher frequency of implementations of controller 40 may exceed 100 kilohertz (KHz), a frequency exceeding low energy Bluetooth frequencies by a multiple of more than 3,000. feels instant versus low data rate. The high frequency and bandwidth enabled by direct communication to the user interface results in no perceptible delay or lag in communication whereby perception and responsive adapting of the orientation of the device head, whether the orientation is proper or improper, cleaning time, coverage, cleaning efficacy, and/or other information is simultaneous. Thus, the user interface is configured to provide feedback, in segment-by-segment or composite format, including cleaning and oral health data the user's mouth.

Embodiments of this device, method or system may further provide feedback to the user regarding an entire or multiple cleaning session(s). In an even more advanced feedback mechanism, the user interface could impart information about individual teeth within a region. The system can communicate information to the user about which regions were adequately treated or cleaned and which regions were not adequately treated or cleaned. The user interface can take many different forms, but is configured to directly and instantaneously provide information to a user concurrent to the cleaning activity. For example, the information can be concurrently read, viewed, heard, felt, and/or otherwise interpreted during the cleaning session. Accordingly, the user interface may be a display, a haptic mechanism, or a speaker to provide sounds or words to the user, or any of a variety of other user interface mechanisms. The feedback may be implemented by a visual, audible or haptic indicator in a user interface, among other types of notifications, reports and feedback.

According to an embodiment, the method further includes the step of communicating the generated feedback to a user interface configured to provide information within an electronic toothbrush to a user before or after, as well as concurrently during, a cleaning session. According to some embodiments, the user interface provides feedback to the user, such as a guided cleaning session, that includes information about where and how to clean.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

These and other aspects of the invention will be apparent from and elucidated with reference to the embodiment(s) described below.

### BRIEF DESCRIPTION OF THE DRAWINGS

In the drawings, like reference characters generally refer to the same parts throughout the different views. Also, the drawings are not necessarily to scale, emphasis instead generally being placed upon illustrating the principles and embodiments relating to the inventive subject matter.
Fig. 1 is a schematic illustration of an oral care device graphically representing various implementations of the inventive subject matter.
Fig. 2 is a schematic representation of a user's oral cavity divided in sextants and graphic illustration identifying sixteen cleaning segments accordance with an embodiment.
Fig. 3 illustrates three sequential positions from the top left to the top right of the user's oral cavity may be mapped against a stored dental model and wherein the user interface is illuminated in either a white or orange color depending on the coverage area and corresponding compliance with endpoint criteria.

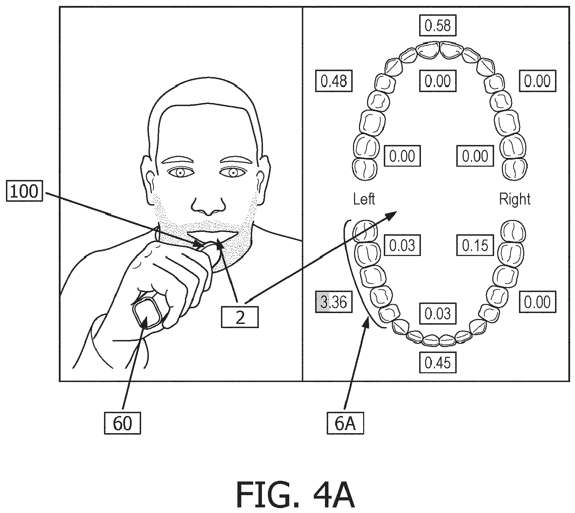

Figs. 4A - 4 C depict in a left frame a user respectively toothbrushing the left lower dental arch designated as cleaning segments 6A and 2A, wherein the user interface in the illuminated portion of the electronic toothbrush displays an orange color indicating when coverage of that cleaning segment does not comply with endpoint criteria and a blue-white color indicating coverage area of that cleaning segment complies with endpoint citeria together with a right frame illustrating dwell times adjacent to corresponding cleaning segments of the lower dental arches including highlighting indicating compliance with endpoint criteria.
Fig. 5 is a flow chart depicting various aspects and functionalities in accordance with the inventive oral care system.
Fig. 6 is a flow chart of an exemplary method for providing instantaneous feedback in an electronic toothbrush as to coverage of a simultaneously toothbrushed cleaning segment of a user's oral cavity.

### DETAILED DESCRIPTION OF EMBODIMENTS

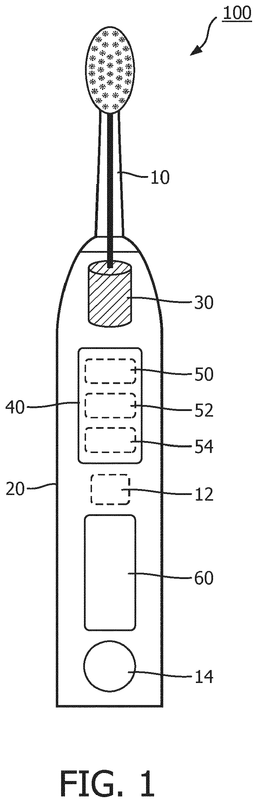

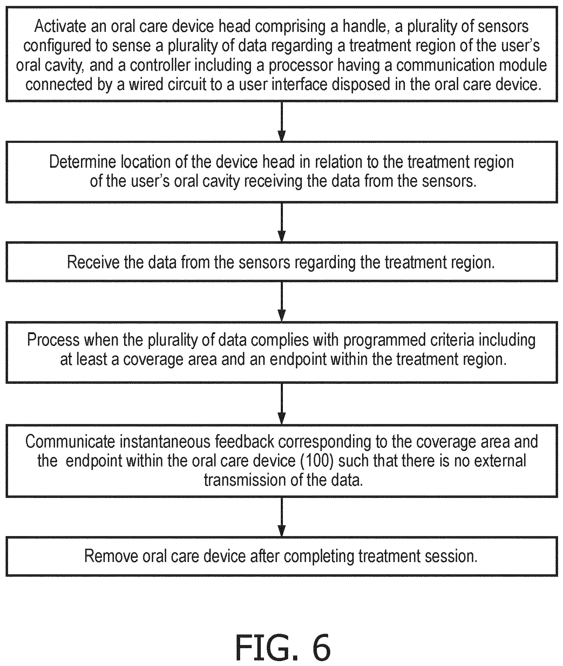

Throughout the following detailed description, representative examples of features are disclosed to illustrate aspects of the claimed invention. Related features in the examples may be identical, similar, or dissimilar. The reader should understand that a given feature need not be the same or similar to the specific portrayal. It should therefore be understood that the representative embodiments illustrated in Figs. 1 - 6 are adapted to a power toothbrush. However, the features of other embodiments of the claimed invention may be adaptable to other applications, including, for example, fluid or aeration ejection cleansers, and other dental treatment and bleaching applications.

The present disclosure describes various embodiments of an oral care device for providing instantaneous feedback to the user about the oral cleaning session through a user interface contained within an oral care device and thereby is constrained from external communication of the user's data. Embodiments of the inventive subject matter include utilizing data provided by a plurality of sensors, such as an accelerometer, gyroscope, pressure, trajectory or magnetic sensor that may be provided in an IMU to track and provide instantaneous feedback through a toothbrush embedded user interface whereby information collated from the data is communicated simultaneously to administering the treatment within a calibrated cleaning segment being treated during a cleaning session.

Implementations of the methods and systems described or otherwise envisioned herein, of this oral care device combines the tracking of the cleaning segment being treated by the oral care device with motion sensor and pressure data from the oral care device in order to determine and provide instantaneous feedback with regard to current treatment coverage. Embodiments further provide instantaneous feedback in context of previous and total coverage in a cleaning session in order to collate instantaneous feedback indicating positioning of the oral care device head is redundant and providing the user with instantaneous feedback regarding overall coverage during and/or at the end of one or more cleaning sessions.

As used herein for purposes of the present disclosure and claims, all definitions set forth below and elsewhere in this specification are intended to control construction of their meaning over dictionary definitions, definitions in documents incorporated by reference, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified.

The term "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of" or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

The phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified.

The term "artificial intelligence," "artificial intelligence module" or "AI" means recognizing and integrating patterns and probabilities in order to analyze data. In various embodiments, artificial intelligence is applied to analyze spatial relationship data provided by cameras, including light arrays, wherein sensed data identifying relevant objects based on, among other parameters, trajectory angles, acceleration and directional pressure and how much the object contrasts with the surrounding field is parsed in order to determine location and coverage of an oral care device and, in particular, the device head.

The term "inertial measurement unit" and its acronym "IMU" refer to an electronic sensor or device that detects and measures movement, including intensity of acceleration and rotational speed. In particular, an IMU measures a device head's specific force, angular rate and orientation using a combination of accelerometers, gyroscopes, and/or magnetometers.

"Sensor" and "sensors" may include a plurality of inertial motion sensor(s) such as an accelerometer, gyroscope, or magnetic sensor(s) that generates sensor data in response to motion, pressure, coverage and time sensor(s). The singular and plural forms, sensor and sensors, are interchangeable.

The sensor may comprise a plurality of sensors 30 configured to function together as the 6-axis or a 9-axis spatial sensor system - three axes translation and three axes rotation - using, for example a 3-axis gyroscope and a 3-axis accelerometer or, for example, 3-axis gyroscope, a 3-axis accelerometer, and a 3-axis magnetometer. Other sensors may be utilized either alone or in conjunction with these sensors, including but not limited to embedded pressure sensor(s), capacitive sensor(s), camera(s), linear light detector array(s), photocell(s), timer(s), and other types of sensors. Many different types of sensors could be utilized, as described or otherwise envisioned herein. According to an embodiment, sensor 30 is configured to generate information indicative of acceleration, pressure, trajectory and angular orientation, timing and location of device head 10 of oral care device 100.

Sensor data generated by sensor(s) 30 is provided to a controller 40. According to an embodiment. Controller 40 may include one or multiple microcontrollers that can be embedded with a thermal map, processors configured to store and apply algorithms and/or artificial intelligence modules for processing data received from sensor(s) 30.

The "dental model of the user's oral cavity" as disclosed and claimed herein, may be provided by one or more sources that are often combined to hone an accurate geometric depiction of the user's oral cavity. Dental models may be provided by (a) an intra oral scan of the user's oral cavity that can be uploaded to the oral care device through a smartphone application or a dental office scan or model, (b) a generic age-based statistical model derived from a database of geometric oral cavity configurations and cleaning patterns, (c) a generic template whereon the user's teeth are modeled in accordance with data received from the sensor(s), and (d) a model of the user's oral cavity based on data stored in the electronic toothbrush during one or more cleaning sessions, wherein the processor 50 employs an algorithm that determines the cleaning region to deduce where the device head 10 is positioned based on the mathematical analysis of the dental model of the user's oral cavity derived from one or more of an oral cavity or dental model scan together with algorithms and/or AI parsing and analysis of the sensor data. The dental model options can be based on a uniform starting point or may be adaptable to sense the location of the device head based on data criteria of algorithms or spatial data analyzed by AI.

The term "controller" is used generally to describe various apparatus relating to the operation of a system, or method. Controller 40 can be implemented in numerous ways to perform various functions discussed herein. Such functions may be implemented by dedicated hardware and a processor employing one or more microprocessors that may be programmed using software code. A controller may be implemented with or without employing a processor, and also may be implemented as a combination of dedicated hardware to perform some functions and a processor (e.g., one or more programmed microprocessors and associated circuitry) to perform other functions. Examples of controller components that may be employed in various embodiments of the present disclosure include, but are not limited to, conventional microprocessors, application specific integrated circuits (ASICs), field-programmable gate arrays (FPGAs) and/or artificial intelligence modules.

A "driving mechanism" refers to any mechanical, electrical, electromechanical, vibratory, ultrasonic, pneumatic or computer-enabled power or pressure source suitable for intraoral applications. For example, batteries may drive electrical motors for intraoral embodiments. Small coin batteries, alkaline or lithium, are preferred due to their small size. The driving mechanism may be activated and deactivated by any off the shelf on/off switch with depressible activator such as,m for example, a push button, rocker or membrane button.

In various implementations, a processor or controller may be associated with one or more storage media, generically referred to herein as "memory," *e.g.,* volatile and non-volatile computer memory. In some implementations, the storage media may be encoded with one or more programs that, when executed on one or more processors and/or controllers, perform at least some of the functions discussed herein. Various storage media may be fixed within a processor or controller or may be transportable, such that the one or more programs stored thereon can be loaded into a processor or controller so as to implement various aspects and functionalities of the present disclosure. The terms "program" or "computer program" are used herein in a generic sense to refer to any type of computer code that can be employed to program one or more processors or controllers.

The term "user interface" refers to an interface between a human user or operator and one or more devices that enables communication between the user and the device(s). Examples of user interfaces that may be employed in various implementations of the present disclosure include, but are not limited to, display screens, illuminated portions of a toothbrush, haptic indicators various types of graphical user interfaces (GUIs), alphanumeric readouts, touch screens, audible indicators, microphones switches, potentiometers, buttons, dials, sliders, track balls, and other types of sensors that may receive some form of processed data. "instantaneous feedback " refers to data transmission to a user interface via a closed communication loop disposed within a device providing an elevated level of bandwidth and frequency whereby accurate and detailed data is transmitted at speeds devoid of lag times such that the instantaneous feedback is transmitted concurrently in tandem with the sensed treatment action such as toothbrushing.

It is expressly understood that, unless clearly indicated to the contrary, in any methods claimed herein that include more than one step or act, the order of the steps or acts of the method is not necessarily limited to the order in which the steps or acts of the method are recited.

All transitional phrases such as "comprising," "including," "carrying," "having," "containing," "involving," "holding," "composed of," and the like are to be understood to be open-ended, i.e., to mean "including but not limited to". Only the transitional phrases "consisting of' and "consisting essentially of' shall be closed or semi-closed transitional phrases, respectively.

Referring to Figs. 1 - 6, the inventive subject matter implements user interface 60 disposed in oral care device 100 illustrated as an electronic toothbrush in the depicted embodiment. As exemplified in Figs. 1, 3 and 4A - 4C, device head 10 includes at its end remote from the body portion tufted bristles shown in the drawings as a toothbrush. The handle 20 includes at least a portion of which is hollow, to contain components of the personal care device. According to an embodiment, device head 10 is mounted so as to be able to move relative to the handle 20. The movement can be any of a variety of different movements, including vibrations or rotation, among others. Although in the present embodiment the oral care device 100 is depicted as an electronic toothbrush, it will be understood that alternative embodiments of the oral care device are also envisioned.

In various embodiments, there may be included within the housing of handle 20, a driving mechanism 12 with a motor and a power source 14 for generating movement, and a transmission component (not shown) for transmitting the generated movements to device head 10. For example, handle 20 can include one or more electromagnets and/or a reservoir, among other components. In this embodiment the power supply comprises one or more rechargeable batteries, not shown, which can, for example, be electrically charged in a charging holder in which oral care device 10 is placed when not in use. According to one embodiment, device head 10 is mounted to the driving mechanism 12 so as to be able to vibrate relative to body portion 12. Device head 10 can be fixedly mounted onto the driving mechanism shaft, or it may alternatively be detachably mounted so that device head 10 can be replaced with a different device head member for different operating features, or when the bristles or another component of the device head are worn out and require replacement. Dispose on handle 20 is an on/off mechanism (not shown) to activate and de-activate driving mechanism 12. The user input 26 allows a user to operate the oral care device 10, for example to turn the device on and off. The on/off mechanism can be a button, touch screen, or switch.

Oral care device 100 includes sensor(s) 30 comprising a plurality of sensors. Sensor(s) 30 is shown in Fig. 1 just below device head 10, but may be located anywhere within oral care device 100. In accordance with the above definition, sensor(s) 30 typically comprises multiple sensors including, for example, an inertial motion sensor such as an accelerometer, gyroscope, or magnetic sensor. According to an embodiment, sensor(s) 30 may be configured to sense one or more of (a) inertial motion, (b) pressure, (c) proximity, (d) trajectory, (e) coverage, and (f) time information provided by device head 10 to thereby determine an endpoint of a time period. In some embodiments, sensors 30 is configured to sense data indicative of the duration within a cleaning segment location, brushing pressure, acceleration and angular orientation of oral care device 10. Sensor(s) 30 can be any of the sensors described or otherwise envisioned herein and may send a constant stream of sensor data to controller 40 for storage and/or analysis, or may temporarily store and aggregate or process data prior to sending it to controller 40.

The various implementations further include a controller 40 configured for: (i) determining, based on a dental model of the user's oral cavity (2) and data sensed by the sensor(s) 30 providing a trajectory calculation for position tracking, a cleaning region in the user's oral cavity wherein the device head 10 is currently positioned; and (ii) a processor 50 configured for processing, based on data sensed by the sensors information, when the data complies with programmed criteria including an endpoint of a time period and a motion exerted by the device head 10 within the treatment or cleaning region.

Thus processing of the sensor data by processor 50 according to various embodiments and implementations, can generally comprise retrieving stored sensor data from memory 52 based on, for example, a user's dental model or prior treatment sessions, for analysis, analyzing the data to determine the locale of device head 10 in context of calibrated treatment regions such as cleaning segments within oral cavity 2, analyzing the data to determine a coverage area and duration of device head 10 within a relevant treatment region. Coverage area determination may include data measuring relative pressure of device head 10 and tracking oral care device 100 during a treatment or cleaning session while instantaneously collating and outputting data to provide directly transmitted session feedback to user interface 60 disposed in handle 20 through hardwired connection module 54. Controller 40, processor 50 and user interface 60 are thus configured for directly communicating instantaneous feedback corresponding to at least endpoint and the coverage area data concurrent with brushing motion such that there is no external transmission of data and feedback information outside of oral care device 100.

According to various embodiments and implementations, controller 40 may be formed of one or multiple modules, and is configured to operate oral care device 100. Controller 40 can comprise, for example, a processor 50 including a memory 52. Processor 50 may take any suitable form, including but not limited to a microcontroller, multiple microcontrollers, circuitry, a single processor or microprocessors, or plural processors or microprocessors. Memory 52 of processor 50 can also take any suitable form, including a non-volatile memory and/or RAM. The non-volatile memory may include read only memory (ROM), a hard disk drive (HDD), or a solid state drive (SSD). The memory can store, among other things, an operating system as well as sensor data and connectivity module 54. The RAM is used by the processor for the temporary storage of data. According to an embodiment, an operating system may contain code which, when executed by controller 40, controls operation of the hardware components of oral care device 100. Various implementations of processor 50 transmit collected and collated sensor data to the user interface 60.

As further depicted in Fig. 1, oral care device 100 also has a power source 14 which can be AC power, or can be battery power from a rechargeable battery.

Connectivity module 54 is configured and/or programmed to transmit feedback information directly to user interface 60. To protect the privacy of the user information provided and stored in the device, connectivity module 54 restricts transmission to the user interface through a hardwired, embedded system contained within oral care device 100. Thus, there is no transmission of data or feedback information to an external device or network.

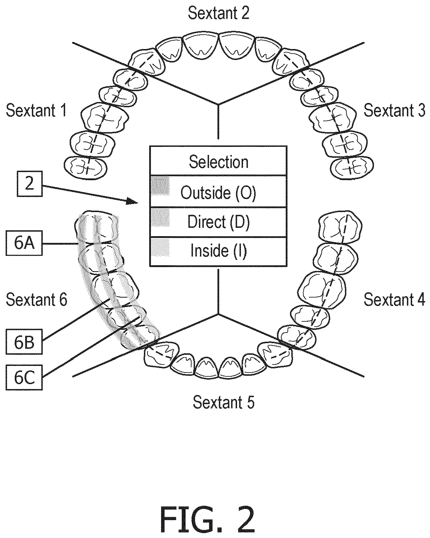

Fig. 2 is a schematic representation of a user's oral cavity depicting exemplary treatment regions configured as sixteen cleaning segments included in 6 sextants. The illustrated cleaning segments include respective upper and lower sections of the oral cavity 2 dental arches include left side sextants 1 and 6, upper and lower center sextants 2 and 5 and upper and lower right side sextants 3 and 4. As illustrated by delineations of cleaning segments 6A, 6B and 6C of the lower left sextant 6 of the lower dental arch, the rear portions 1, 3 and 4, 6 of the upper and lower dental arches that include the molar teeth each have three cleaning segments encompassing a respective outside (O) surface, an inside (I) surface and a transverse upper direct (D) surface bridging the inner surface and outer surface. In some embodiments, the upper and lower center sextants 2, 5 include incisors and canines may include a direct (D) bridge surface. However, for brushing applications, the center sextants may in some embodiments include two cleaning segments comprising an outside (O) surface and an inside (I) surface. In various implementations of the embodiments, the data criteria for the endpoint is set when the dwell time and pressure data complies with the coverage area criteria in the cleaning segment for a duration of between about 7 seconds and about 8 seconds.

Instantaneous feedback provided by the various embodiments may be implemented through a calculation module for determining a coverage area which may be defined in factors of dwell time x pressure x location wherein time spent on brushing is calculated via the pressure sensor and the current position of the brush in the mouth such that whereby reduced or lack of pressure on the device head 10 is excluded from the dwell time. Hence, dwell time only accumulates whenever the pressure and the location parameters are being met. Whenever this has been met, the handle of the brush indicates to the user that the next segment can be cleaned.

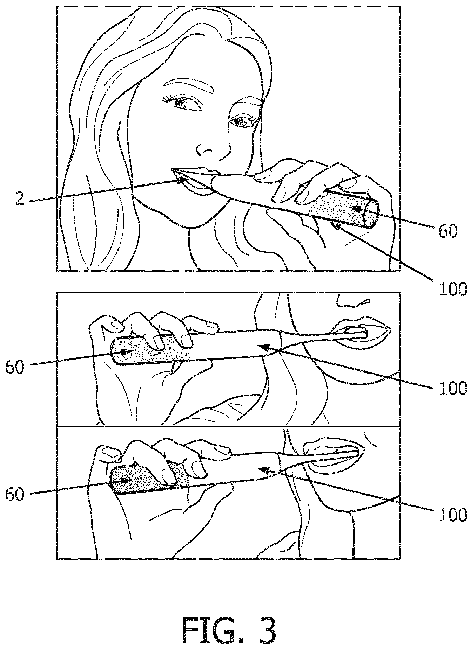

As best shown in Figs. 3, 4A - 4C, 5 and 6, various embodiments include a system and methodology for employing electronic toothbrushes and other oral care devices comprising the steps of activating the aforedescribed oral care device 100 having a device head 10 and handle 20, a plurality of sensors 30 configured to sense a plurality of data regarding coverage of a treatment region of the user's oral cavity, and a controller including a processor 50 having a communication module 54 connected to a user interface 60, determining a location of the device head 10 in relation to the treatment region of the user's oral cavity, receiving the data from the sensors, processing when the plurality of data complies with programmed criteria including at least a coverage area and an endpoint within the treatment region; and communicating instantaneous feedback corresponding to the endpoint and the motion data within the cleaning region in a user interface 60 such that there is no external transmission of data or feedback information outside of oral care device 100. The step of determining when the device head 10 is located within a cleaning region may process data derived from a dental model of the user's oral cavity 2 or artificial intelligence.

In implementations of the oral care system, information sensed through the IMU including orientation of the device head 10 during the cleaning session is collated into feedback corresponding to when the data complies with programmed and/or artificial intelligence derived criteria including a coverage area and endpoint of a time period within a treatment region such as a cleaning segment. In accordance with the various embodiments, implementations of the system communicate instantaneous feedback in a user interface 60 corresponding to the endpoint and the motion data within the cleaning region concurrent with treatment of the region, such as toothbrushing of a cleaning segment wherein the processor 50 directly communicates with the user interface 60 through wired circuitry of a communication model such that there is no external transmission of data outside of the oral care device 100.

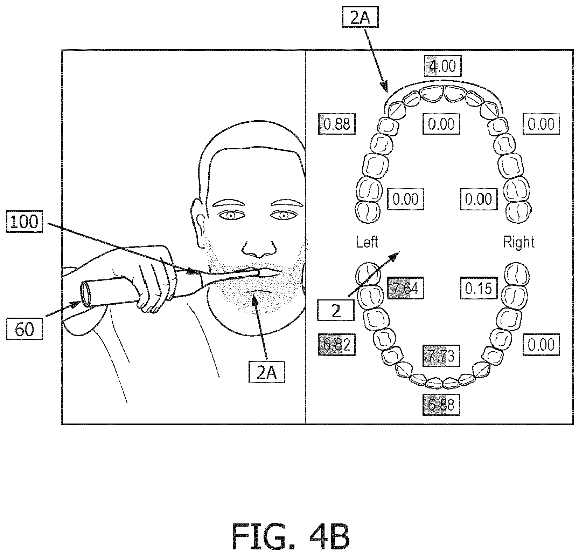

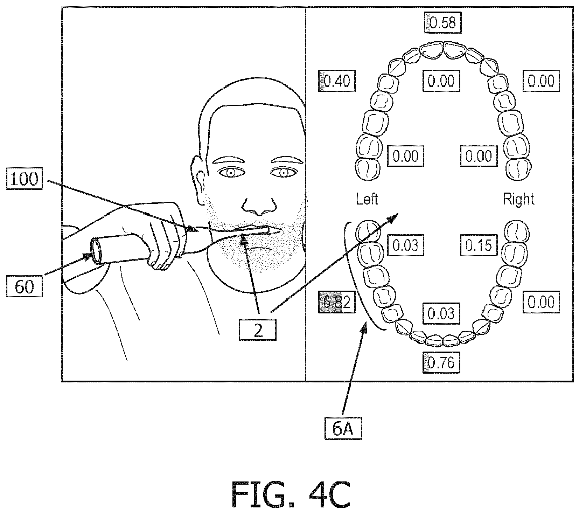

As shown in Figs. 3 and 4A - 4C, the step of communicating instantaneous feedback via user interface 60 may be provided in handle 20. In certain embodiments, user interface 60 projects a first indicator before coverage area corresponds criteria prior to reaching an endpoint and projects a second indicator after the endpoint of relevant cleaning segments of oral cavity 2 when data criteria for completing brushing of a corresponding coverage area is reached. Some embodiments such as shown in Figs. 3 and 4A - 4C, exemplify providing instantaneous feedback through a user interface 60 including an illuminated portion of a handle and a coverage calculation based on the duration and pressure of device head 10 within a treatment region. Hence, some embodiments provide instantaneous feedback regarding the status in context of compliance with data criteria for reaching a brushing endpoint corresponding with cleaning segments such as the rear lower inward facing sextant 6A in as shown in Figs. 4A and 4C and front outward facing upper sextant 2A depicted in Fig. 4B through an orange light to indicate further brushing to reach an endpoint and a white-blue light upon compliance with endpoint data criteria.

Feedback may include numeric or alphanumeric, haptic or audible indicators of the duration of device head 10 in corresponding cleaning segments shown in the numerical dwell time readouts adjacent to the relevant cleaning segments in right frames of Figs. 4A - 4C. As also shown in Figs. 4A and 4B showing instantaneous feedback in a first indicator displays an illuminated portion of an orange light in handle 20 when data sensed by device head 10 indicates that the duration and pressure sensed the coverage area of the outside bottom left cleaning segment, *i.e.,* sextant 6A of Fig. 2, does not comply with endpoint criteria for that cleaning segment. In addition to the illuminated handle instantaneous feedback 60 exemplifications as an orange and a blue-white light display, Figs. 4A - 4C exemplify providing dwell time readouts of brushed cleaning segments adjacent to the relevant cleaning segment shown in the right frames of the respective figures wherein the readouts are highlighted to indicate endpoint.

Embodiments and implementations of the device and method may further include the step of communicating feedback when device head 10 is repositioned within a cleaning region wherein the controller indicates previous compliance with data criteria corresponding with reaching an endpoint. A further feature may include the controller providing corresponding feedback to user interface 60 when device head 10 is repositioned within a cleaning region wherein the data criteria indicative of partial compliance.

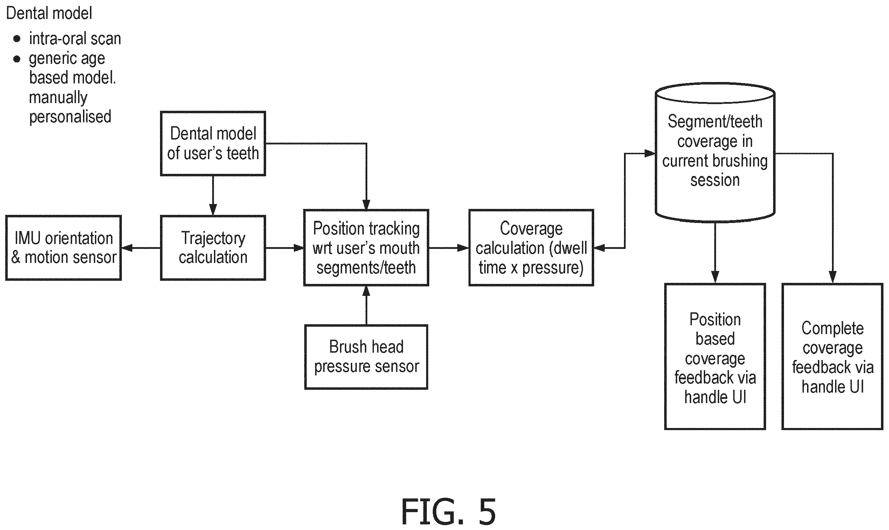

A yet further feature of the illustrated embodiments illustrated in Figs. 4A - 4C and pointed out in Fig. 5 includes the step of communicating feedback regarding all treatment or cleaning regions covered in a session.

Still referring to Fig. 5, various implementations may be utilized to determine that device head 10 is located within a treatment or cleaning segment of the user's oral cavity 2. For example, the user can be instructed to begin the cleaning session at a certain area of the mouth to ensure that device head 10 is properly located at a dedicated starting point. According to another embodiment, oral care device 100 can include a sensor(s) 30 including, for example, an inertial motion sensor having a camera utilized to determine whether the device is located within a cleaning segment of the user's oral cavity. Such sensor(s) 30 could generate sensor data in response to typical cleaning motions and can link this information to a template of specific locations within the mouth. According to an embodiment, a difference in motion between front teeth and molars can be used to determine which time samples are from the molars and which samples are collected at the front teeth.

According to another embodiment, the device or system may employ a dental model of the user's oral cavity that is predetermined or based on learned information of AI about where within the user's oral cavity 2 the oral care device 100 is generally first activated. For example, the system may determine after several uses that the user always starts on the lower right outer quadrant.

According to some embodiments, the device or system may utilize two or more of these approaches simultaneously or sequentially to further refine the localization of the oral care device 10 within the user's oral cavity 2, and, more specifically, whether that locale is a particular cleaning segment. For example, prior knowledge about the likelihood of a typical starting position could be utilized together with an estimate obtained from sensor data to achieve a more accurate read of the oral care device 100 location within the user's oral cavity 2.

According to an embodiment, the orientation, duration and/or motion data collected by oral care device 100 when it is located within a cleaning region can be stored for future processing. Since the user may temporarily deviate from expected behavior, additional processing steps can be applied through application of algorithms and/or AI to improve the precision of the estimate.

To further increase accuracy, a compensation for known variations of the ideal behavior can be applied. According to an embodiment, predetermined or learned knowledge about the user's dexterity can be exploited to compensate for a bias in the estimate of the mouth coordinate system. For example, using a dental model of the user's oral cavity 2 as a frame of reference, oral care device 100 can deduce and therefore track the orientation and/or location of the oral care device 100 as the user moves it throughout the oral cavity 2, adopting new orientations and locations.

Advantages of the inventive device, method and system may include one or more of the following. The various implementations enhance and speeds and lowers cost of cleaning or other dental treatment applications. Such instantaneous feedback enables the user to simultaneously adapt toothbrushing coverage and pressure. The embedded user interface further saves time, effort and inconvenience in coordination of setting up an aptly configured support stand or structure resulting from the user's juggling of a second electronic device such as a smartphone, then coordinating the relative orientation and pressure placed on the oral care device while simultaneously keeping the feedback provided on the smartphone display in sight. The embedded user interface 60 provides a display that moves in tandem with the oral care device 100 and thereby imparts advantages of keeping the display in the user's line of view while simultaneously brushing.

Refraining from external transmissions to electronic devices, such as, for example, smartphones, and networks, confers numerous further advantages including substantially shortened and thus much faster feedback loops, as well as, improved accuracy and levels of sensed and processed data reflected in feedback provided in the user interface 60 and maintaining the security of user data by hardwired configuration of sensor(30), controller (40), processor (50) together with memory 52 and connectivity module 54 within a closed feedback loop to thereby eliminating buses or any potential communication mechanism for transmission of data or feedback information to external devices and network. S

In addition to the improved performance of the closed feedback communication loops of internal user interface provided by the disclosed embodiments and implementations, further advantages include the lower cost and streamlined configuration of internally hardwiring the controller and associated microcontrollers, processors/microprocessors and circuitry in comparison with the increased cost of manufacturing, energy consumption and potential for malfunction of blue tooth and, to a greater extent, network or wi fi capability.

Yet further advantages include adaptability of oral care device 100 to oral cavity and dentition geometries deviating from statistical averages by incorporating actual scans and detected toothbrushing trajectories corresponding with varied geometries into user dental models. Such irregularities may include dental malocclusion, wide, shallow as well as, deep and narrow dental arches, deviant or irregular positioning of maxillary and mandibular arches such as, for example, boney defect or any combination of naturally or unnaturally missing teeth.

While several inventive embodiments have been described and illustrated herein, those of ordinary skill in the art will readily envision a variety of other means and/or structures for performing the function and/or obtaining the results and/or one or more of the advantages described herein, and each of such variations and/or modifications is deemed to be within the scope of the inventive embodiments described herein. More generally, those skilled in the art will readily appreciate that all parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure

## Claims

1. An oral care device (100) for providing instantaneous feedback when treating a user's oral cavity (2), comprising:
a device head (10) and a handle (20);
a driving mechanism (12) for activating the device head (10);
a power source (14) configured to activate the driving mechanism;
a plurality of sensors (30) configured to sense data regarding the user's oral cavity (2);
a controller (40) having a processor (50) configured for determining, based on the data, (i) a treatment region in the user's oral cavity (2) wherein the device head (10) is currently positioned; and (ii) when the data complies with programmed criteria corresponding to at least a coverage area and an endpoint within the treatment region, wherein the controller (40) includes a communication module (54); and
a user interface (60) disposed in the oral care device (100), wherein the communication module (54) is configured for providing the instantaneous feedback corresponding to the coverage area and the endpoint instantaneously such that there is no external transmission of the data and the instantaneous feedback outside of the oral care device (100).

2. The oral care device (100) of claim 1, wherein the device head (10) is an electronic toothbrush, wherein the determining of the location of the device head (10) is at least partially based on a dental model of the user's cavity, and the treatment region is a cleaning segment, and the driving mechanism (12) drives the device head (10) in a reciprocating motion.

3. The oral care device (100) of claim 2, wherein the user interface (60) is disposed in the handle (20) of the electronic toothbrush.

4. The oral care device (100) of claim 3, wherein the instantaneous feedback communicated to the user interface (60) by the processor (50) comprises an illuminated portion of the handle (20) corresponding to at least one of (i) the coverage area (ii) the endpoint, and (iii) a pressure exerted by the device head (10) on the cleaning segment.

5. The oral care device (100) of claim 4, wherein the illuminated portion projects a first color before the endpoint and wherein the illuminated portion projects a second color after the endpoint.

6. The oral care device (100) of claim 3, wherein the instantaneous feedback communicated to the user interface (60) by the processor (50) is at least one of the group consisting of: (i) a visual code, (ii) a haptic indicator, (iii) an audible indicator, and (iv) an alphanumeric readout.

7. The oral care device (100) of claim 3, wherein the processor (50) provides the instantaneous feedback to the user interface (60) when the device head (10) is located within the cleaning segment wherein the controller determines previous compliance with the data corresponding to the endpoint of the cleaning segment.

8. The oral care device (100) of claim 3, wherein the processor (50) provides the instantaneous feedback to the user interface (60) when the device head (10) is located within the cleaning segment wherein the controller determines partial compliance with the data corresponding to the endpoint of the cleaning segment.

9. The oral care device (100) of claim 3, wherein the processor (50) provides the instantaneous feedback to the user interface (60) regarding all the cleaning segments of a cleaning session.

10. The oral care device (100) of claim 2, wherein the controller (40) identifies the treatment regions as a set of sixteen cleaning segments located in an six sextants of the user's oral cavity (2), wherein the sixteen cleaning segments include a right sextant, a left sextant and a center sextant in an upper dental arch and a right sextant, a left sextant and a center sextant in a lower dental arch, wherein the right sextant and the left sextant of the upper dental arch and the right sextant and the left sextant of the lower dental arch each have three cleaning segments comprising an outside surface, an inside surface and a transverse direct surface bridging the inner surface and outer surface of the cleaning segment and the center sextant of the upper dental arch and the center sextant of the lower dental arch have two cleaning segments comprising the outside surface and the inside surface.

11. An oral care treatment method for providing instantaneous feedback when treating a user's oral cavity, the method comprising the steps of:
activating an oral care device (100) comprising a device head (10) and a handle (20), a plurality of sensors (30) configured to sense a plurality of data regarding at least a coverage area and an endpoint of a treatment region of the user's oral cavity, and a controller including a processor (50) having a communication module (54) connected by a wired circuit to a user interface (60) disposed in the oral care device (100);
determining a location of the device head (10) in relation to the treatment region of the user's oral cavity;
receiving the data from the sensors;
processing when the plurality of data complies with programmed criteria including at least the coverage area and the endpoint within the treatment region;
communicating the instantaneous feedback in a user interface (60) disposed in the handle (20) of the oral care device (100) corresponding to the coverage area and the endpoint within the oral care device (100) such that there is no external transmission of the data and the instantaneous feedback outside of the oral care device (100); and
removing the oral care device (100) after completing a treatment session.

12. The oral care method of claim 11, wherein the step of communicating the instantaneous feedback to the user interface (60) in the handle (20) displays a first indicator before the endpoint and displays a second indicator after the endpoint.

13. The oral care method of claim 12, wherein the first indicator displays an illuminated portion including a first color and wherein the second indicator displays an illuminated portion including a second color.

14. The oral care method of claim 11, further comprising the step of communicating the instantaneous feedback to the user interface (60) when the device head (10) is located within a treatment region wherein the controller determines previous compliance with the data corresponding to the endpoint of the treatment region.

15. An oral care treatment system for providing instantaneous feedback when treating a user's oral cavity (2), comprising:
an oral care device (100) for treatment of the user's oral cavity (2);
a plurality of sensors (30) configured to sense data regarding at least a coverage area and an endpoint of a treatment region of the user's oral cavity (2); and
a controller (40) including a processor (50) configured for determining and concurrently communicating to a user interface (60) disposed within the oral care device (100) the instantaneous feedback corresponding to the coverage area and the endpoint such that there is no external transmission of data and the instantaneous feedback outside of the oral care device (100).
